# EUROPÄISCHE PATENTSCHRIFT

(11) **EP 3 668 704 B1**
(45) Veröffentlichungstag und Bekanntmachung des Hinweises auf die Patenterteilung: **27.10.2021**
(21) Anmeldenummer: 18785810.5
(22) Anmeldetag: 14.08.2018
(51) Int. Cl.: B29C 64/214, B33Y 10/00, B33Y 30/00, B33Y 40/00, B29C 64/153, B29C 64/188, B29C 64/205

(54) **ANORDNUNG UND VERFAHREN ZUR ERZEUGUNG EINER 3D-STRUKTUR**
ASSEMBLY AND METHOD FOR CREATING A 3D STRUCTURE
ENSEMBLE ET PROCÉDÉ POUR PRODUIRE UNE STRUCTURE 3D

(30) Priorität: 17.08.2017 DE 102017007785
(43) Veröffentlichungstag der Anmeldung: 24.06.2020
(73) Patentinhaber: Laempe Mössner Sinto GmbH, 39179 Barleben OT Meltzendorf (DE)
(72) Erfinder: WEDEMEYER, Frank, 79669 Zell in Wiesental (DE); WINTGENS, Rudolf, 79650 Schopfheim (DE)
(74) Vertreter: Fischer, Volker
(86) Internationale Anmeldenummer: PCT/DE2018/000238
(87) Internationale Veröffentlichungsnummer: WO 2019/034192

(56) Entgegenhaltungen:
- EP-A2- 0 431 924

## Beschreibung

Die Erfindung betrifft ein System zur Erzeugung einer 3D-Struktur, umfassend ein aus Partikeln mit einem Durchmesser bestehendes partikelförmiges Baumaterial, ein Mittel zum Verdichten eines schichtweise aufzubringenden partikelförmigen Baumaterials und ein Antriebsmittel, um das Mittel in eine gesteuerte Bewegung zu versetzen.

Die Erfindung betrifft auch ein Verfahren zur Erzeugung einer 3D-Struktur, bei welchem eine Schicht eines aufzubringenden partikelförmigen Baumaterials über einem Baufeld bereitgestellt wird, welches zumindest teilweise verdichtet wird und wobei durch einen partiellen physikalischen oder chemischen Härtungsprozess oder einen Schmelzprozess in einem schichtweisen Aufbau die 3D-Struktur entsteht.

Bekannt ist es, zur Herstellung einzelner oder serienmäßiger Bauteile, Werkstücke oder Formen einen sogenannten 3D-Druck bzw. ein sogenanntes 3D-Druckverfahren einzusetzen. Bei derartigen Druckverfahren werden dreidimensionale Bauteile oder Werkstücke schichtweise aufgebaut hergestellt. Der Aufbau erfolgt computergesteuert aus einem oder mehreren flüssigen oder festen Werkstoffen nach vorgegebenen Maßen und Formen. Vorgaben für die zu druckenden Bauteile oder Werkstücke können beispielsweise von sogenannten rechnerunterstützten Konstruktionssystemen (CAD engl. computer-aided design) bereitgestellt werden.

Beim Druck der 3D-Strukturen finden physikalische oder chemische Härtungsprozesse oder ein Schmelzprozess statt. Als Werkstoffe für derartige 3D-Druckverfahren werden Kunststoffe, Kunstharze, Keramiken und Metalle eingesetzt.

Bei der Umsetzung von 3D-Druckverfahren sind verschiedene Fertigungsverfahrensabläufe bekannt.

Mehrere dieser Verfahrensabläufe umfassen jedoch die nachfolgend beispielhaft dargestellten Verfahrensschritte:
- Teil- oder vollflächiges Auftragen von partikelförmigem Baumaterial, auch als Partikelmaterial bezeichnet, auf ein sogenanntes Baufeld, um eine Schicht aus nichtverfestigtem Partikelmaterial zu bilden;
- Selektives Verfestigen der aufgebrachten Schicht aus nichtverfestigtem partikelförmigem Baumaterial in vorbestimmten Teilbereichen, beispielsweise durch ein selektives Verdichten, Aufdrucken oder Aufbringen von Behandlungsmittel wie beispielsweise einem Bindemittel oder Einsatz von Laser;
- Wiederholung der vorhergehenden Verfahrensschritte in einer weiteren Schichtebene zum schichtweisen Aufbau des Bauteils oder Werkstücks. Hierfür ist es vorgesehen, das Bauteil oder Werkstück, welches auf dem Baufeld schichtweise aufgebaut bzw. aufgedruckt wird, mit dem Baufeld jeweils um eine Schichtebene oder Schichtdicke abzusenken oder die 3D-Druckvorrichtung jeweils um eine Schichtebene oder Schichtdicke gegenüber dem Baufeld anzuheben, bevor eine neue Schicht teil- oder vollflächig aufgetragen wird;
- Nachfolgendes Entfernen von losem, nichtverfestigtem partikelförmigem Baumaterial, welches das gefertigte Bauteil oder Werkstück umgibt.

Aus der WO 02/083323 A2 sind ein Verfahren und eine Vorrichtung zum Auftragen von Fluiden, insbesondere von Partikelmaterial, auf einen zu beschichtenden Bereich bekannt, wobei vor einer Klinge, in einer Vorwärtsbewegungsrichtung der Klinge gesehen, das Fluid auf den zu beschichtenden Bereich aufgetragen wird und danach die Klinge über dem aufgetragenen Fluid verfahren wird. Das beschriebene Verfahren zeichnet sich dadurch aus, dass die Klinge eine Schwingung nach Art einer Drehbewegung ausführt.

Wird das Verfahren derart betrieben, dass das Auftragen des Fluids auf den zu beschichtenden Bereich im Überschuss erfolgt, so wird durch die ständige Bewegung der Klinge, die nach Art einer Drehbewegung oszilliert, das überschüssige Fluid, in Vorwärtsbewegungsrichtung der Klinge gesehen, vor der Klinge in einer aus Fluid bzw. Partikelmaterial durch die Vorwärtsbewegung der Klinge gebildeten Walze homogenisiert. Dadurch können etwaige Hohlräume zwischen einzelnen Partikelklumpen gefüllt werden, und größere Klumpen Partikelmaterial werden durch die Walzenbewegung aufgebrochen. Es findet eine Homogenisierung des Partikelmaterials in der Walze statt. Aus diesem sich vor der Klinge befindlichen Partikelmaterial wird ein kleiner Teil in einen Spalt unter die Klinge gezogen, dort verdichtet und so als gleichmäßige Schicht aufgebracht.

Das Aufbringen des Fluids bzw. Partikelmaterials im Bereich vor der Schwingklinge, in Vorwärtsbewegungsrichtung der Klinge gesehen, kann beispielsweise über ein Förderband aus einem Reservoir erfolgen.

Vorgesehen ist es, dass die Drehbewegung der Klinge um eine Drehachse erfolgt, die in Richtung, in Aufbaurichtung des Fluids gesehen, oberhalb des zu beschichtenden Bereichs liegt. Besonders gute Ergebnisse konnten bei dem Verfahren erzielt werden, wenn die Schwingung mit einer Drehbewegung erfolgt, bei der der Drehwinkel in einem Bereich von 0,1 bis 5° liegt.

Die beschriebene Vorrichtung ist insbesondere zur Verwendung zum Auftragen von mit Binder versehenem Partikelmaterial geeignet.

Aus der EP 1 494 841 B1 sind ein Verfahren und eine Vorrichtung zum Auftragen von Fluiden bekannt. Die zu lösende Aufgabe besteht darin, eine Vorrichtung sowie eine Verwendung der Vorrichtung bereitzustellen, mit denen eine noch bessere Verteilung des nur in geringer Menge aufgetragenen Fluids auf einem zu beschichtenden Bereich möglich ist.

Vorgesehen ist es, dass vor die Beschichterklinge ein nach unten offener Trichter gehängt wird, welcher starr mit der Klinge verbunden ist und somit mit ihr mitschwingt. Der Trichter führt den Partikelmaterialvorrat für zumindest eine Beschichterfahrt über die gesamte Länge des Baufelds mit. Bei Betätigung des Schwingmechanismus des Trichters wird das Partikelmaterial im Trichter fluidisiert und fließt aus dem unten offenen Trichter vor die Klinge. Der Trichter kann somit eine wesentlich größere Menge an Material mitführen, als für die aktuelle Schicht nötig ist.

Offenbart ist es auch, dass die genutzte Schwingklinge vorzugsweise über einen Exzenter angetrieben wird, welcher auf der Antriebsmotorwelle drehfest angebracht wird. Die Kraftübertragung vom Exzenter auf die Schwingklinge kann beispielsweise formschlüssig, also durch direktes Aufbringen eines Wälzlagers auf den Exzenter oder durch kraftschlüssige Übertragung mittels einer durch Federkraft beaufschlagten Laufrolle auf den Exzenter, erfolgen.

Auch dieses Verfahren ist besonders für die Verwendung zum Auftragen von mit Bindemittel versehenem Partikelmaterial geeignet.

Aus der WO 2016/030375 A2 sind eine Beschichteranordnung für einen 3D-Drucker sowie ein Verfahren zum Aufbringen zweier Schichten aus partikelförmigem Baumaterial bekannt.

Die Beschichteranordnung weist einen Beschichter auf, welcher einen Behälter umfasst, der einen inneren Hohlraum zur Aufnahme von partikelförmigem Baumaterial definiert, der in einer Öffnung zum Ausgeben des partikelförmigen Baumaterials mündet und ein Streichelement hat, von dem eine nach unten ausgerichtete Streichfläche ausgebildet ist und das eingerichtet ist, um aus der Öffnung ausgegebenes Baumaterial mit der Streichfläche zu überstreichen, um dadurch das ausgegebene Partikelmaterial zu nivellieren und/oder zu verdichten.

Die Beschichteranordnung weist auch eine Einstellvorrichtung auf, die eingerichtet ist, um einen Neigungswinkel der Streichfläche variabel einzustellen.

Aus der DE 693 30 495 T2 sind ein Verfahren und eine Vorrichtung zum Aufbringen von pastösen Medien auf einen Träger zum Herstellen eines 3D-Bauteils bekannt.

Die zu lösende Aufgabe besteht darin, dass ein Verfahren zum Aufbringen von pastösen Medien auf einen Träger geschaffen wird, womit die Prozesssicherheit beim Schablonendruck erhöht und die Fehlerquoten verringert werden können. Außerdem soll eine höhere Verarbeitungsgeschwindigkeit erzielt werden.

Zur Lösung dieser Aufgabe ist es vorgesehen, dass ein Aufbringungsmuster durch eine auf dem Träger angeordnete Maske vorgegeben wird und dass das pastöse Medium mittels eines Rakels aufgebracht wird, wobei das pastöse Medium in von der Maske freigelassene Ausnehmungen gedrückt wird.

Offenbart ist es auch, dass der beim Auftragen verwendete Rakel von einem Aktuator in Schwingungen versetzt wird, die bei einem Vorschub des Rakels auf das pastöse Material übertragen werden. Hierdurch verläuft das pastöse Material besser in die Durchbrüche bzw. Ausnehmungen der Maske oder Schablone ein, so dass diese vollständig mit dem pastösen Medium ausgefüllt sind. Die Verbesserung durch Aufbringen von Schwingungen kann dadurch erklärt werden, dass aufgrund der Temperaturerhöhung des Mediums durch die Energiezufuhr die Rollreibung der pastösen Partikel verringert und die Viskosität scheinbar herabgesetzt werden.

Da ausschließlich das am Rakel anliegende Medium Schwingungsenergie zugeführt bekommt, wird nur hier die Viskosität scheinbar herabgesetzt. Das Medium läuft dadurch besser in die Freimachungen der Schablone und legt sich in Form der dichtesten Kugelpackung auf dem Substrat ab. Insgesamt werden somit eine höhere Verarbeitungsgeschwindigkeit und eine gesteigerte Druckqualität mit geringerem Vorrat von pastösem Medium auf der Schablone erreicht.

Aus der DE 102 16 013 B4 sind ein Verfahren und eine Vorrichtung zum Auftragen von Fluiden, insbesondere Partikelmaterial, auf einen zu beschichtenden Bereich bekannt.

EP-A-0431924 offenbart die Merkmale der Oberbegriffe der Ansprüche 1 und 8.

Die Aufgabe besteht darin, eine Vorrichtung sowie eine Verwendung der Vorrichtung bereitzustellen, mit denen eine noch bessere Verteilung des nur in geringer Menge aufgetragenen Fluids auf einem zu beschichtenden Bereich möglich ist. Zur Lösung dieser Aufgabe wird vor einer Klinge, in Vorwärtsbewegungsrichtung der Klinge gesehen, das Fluid auf den zu beschichtenden Bereich aufgetragen und danach die Klinge über dem aufgetragenen Fluid verfahren. Hierbei soll die Klinge eine Schwingung ausführen, wobei das Fluid aus einem nach unten, in Richtung des zu beschichtenden Bereichs offenen, mit der Klinge schwingenden Behälter zugeführt wird. Die Schwingung der Klinge soll nach Art einer Drehbewegung erfolgen.

Offenbart ist es auch, dass ein Exzenter zum Antrieb der Klinge vorgesehen ist und dass eine Kraftübertragung vom Exzenter auf die Klinge formschlüssig oder kraftschlüssig erfolgen kann.

Die Nachteile dieses bekannten Standes der Technik bestehen darin, dass meist die Klingen oder Schwingklingen beispielsweise mittels eines Exzenters in eine Bewegung, vorzugsweise eine Art Drehbewegung, versetzt werden müssen. Hierfür sind ein entsprechender Antrieb wie beispielsweise ein Elektromotor und notwendige mechanische Bauteile zur Erzeugung bzw. Umsetzung der benötigten Bewegungsform notwendig. Somit wächst sowohl der Aufwand als auch der Platzbedarf bei der Konstruktion an. Außerdem wird die Fertigung derartiger Baugruppen komplizierter, wobei sich auch die Kosten für die Herstellung derartiger Baugruppen erhöhen.

Bedingt durch die notwendige Mechanik und teilweise Kopplung an einen Vorratsbehälter sind auch die maximal erreichbaren Frequenzen derartiger Baugruppen und somit ihre Verarbeitungs- bzw. Verdichtungsgeschwindigkeit begrenzt. Außerdem stehen Ausbringung und Verdichtung des Materials in direktem Zusammenhang und beeinflussen sich gegenseitig. Eine unabhängige Separation zwischen Ausbringung und Verdichtung ist somit nicht möglich.

Ein weiterer Nachteil bei einer eine Schwingung ausführenden Klinge besteht beispielsweise darin, dass eine Krafteinleitung auf eine vergleichsweise große Fläche des zu verdichtenden Fluids erfolgt. Hierdurch bedingt kann es bei einer Schwingbewegung der Klinge zu einer gleichzeitigen Krafteinwirkung auf bereits verdichtete und noch unverdichtete Bereiche des Fluids kommen. Hierdurch ist eine Beeinträchtigung der Qualität der Verdichtung zu erwarten.

Die Aufgabe der Erfindung besteht nunmehr darin, ein System und ein Verfahren zur Erzeugung einer mehrere Schichten umfassenden 3D-Struktur anzugeben, womit eine bessere Verdichtung eines schichtweise aufzubringenden partikelförmigen Baumaterials bei einer hohen Oberflächengüte sowie eine höhere Geschwindigkeit beim Aufbau der einzelnen Schichten erreicht wird.

Die Aufgabe wird durch ein System mit den Merkmalen gemäß Patentanspruch 1 der selbstständigen Patentansprüche gelöst. Weiterbildungen sind in den abhängigen Patentansprüchen 2 bis 7 angegeben.

Die Aufgabe wird auch durch ein Verfahren mit den Merkmalen gemäß Patentanspruch 8 der selbstständigen Patentansprüche gelöst. Weiterbildungen sind in den abhängigen Patentansprüchen 9 bis 13 angegeben.

Vorgesehen ist es, dass ein Verdichterelement als eine Klinge mit mindestens einer Schneide ausgebildet ist. Bei dieser messerartigen Ausbildung des Verdichterelements ist es vorgesehen, dass die Breite einer Schneide in einem Bereich zwischen 0,1-mal bis 3-mal dem Durchmesser eines Partikels des partikelförmigen Baumaterials bzw. Partikelmaterials liegt. Die Breite der Schneide wird hierbei an der Stelle oder dem Ende der Schneide bestimmt, welche bzw. welches bei einem Verdichtungsvorgang mit den Partikeln des partikelförmigen Baumaterials bzw. Partikelmaterials in Kontakt tritt.

Bevorzugt liegt die Breite einer Schneide der Klinge in einem Bereich zwischen 0,3-mal bis 2-mal dem Durchmesser eines Partikels des partikelförmigen Baumaterials bzw. Partikelmaterials. Besonders bevorzugt liegt die Breite einer Schneide in einem Bereich zwischen 0,5-mal bis 1-mal dem Durchmesser eines Partikels des partikelförmigen Baumaterials bzw. Partikelmaterials.

Die Größe bzw. der Durchmesser eines Partikels des partikelförmigen Baumaterials bzw. Partikelmaterials liegt üblicherweise in einem Bereich zwischen 0,1 und 0,2 mm. Besonders bevorzugt liegt die Größe eines Partikels des partikelförmigen Baumaterials bzw. Partikelmaterials bei einem Durchmesser von 0,18 mm.

Mit der Ausgestaltung der Breite einer Schneide des Verdichterelements in den oben beschriebenen Dimensionen wird es erreicht, dass eine Beeinträchtigung der Qualität der Verdichtung vermieden wird, da eine Krafteinleitung auf die Oberfläche des partikelförmigen Baumaterials bzw. Partikelmaterials auf einen sehr schmalen Bereich beschränkt wird, welcher in der Größenordnung eines Partikels oder einiger weniger Partikel des partikelförmigen Baumaterials bzw. Partikelmaterials liegt.

Derart kann durch die Erfindung, unter der Voraussetzung einer beispielsweise gleichförmigen Bewegung des Verdichterelements über dem Baufeld und einer entsprechenden Dimensionierung einer Schneide, eine Beeinträchtigung benachbarter, bereits verdichteter Partikel praktisch ausgeschlossen werden. Dadurch wird erheblich die Qualität der Verdichtung der aufgetragenen Schicht partikelförmigen Baumaterials bzw. Partikelmaterials verbessert.

Die Erfindung sieht auch vor, dass mehrere dieser jeweils eine Schneide aufweisenden Verdichterelemente in einer Verdichteranordnung angeordnet werden. Derartige Verdichterelemente können beispielsweise dünne Streifen aus einem metallischen Werkstoff sein, welche die oben beschriebene messerartige Ausbildung mit einer entsprechenden Schneide aufweisen.

Die beispielsweise drei in einer Verdichteranordnung angeordneten, messerartig ausgebildeten Verdichterelemente können beispielsweise derart eng parallel zueinander angeordnet sein, dass ein Eindringen des partikelförmigen Baumaterials zwischen diese Verdichterelemente verhindert wird.

Die Verdichterelemente sind mit je einem eigenen Antriebsmittel verbunden und werden von ihrem jeweiligen Antriebsmittel in eine lineare Bewegung, also eine sogenannte Hin- und Herbewegung, versetzt.

Vorgesehen ist, dass die Antriebsmittel elektrisch angetrieben werden. Alternativ können die Antriebsmittel auch elektromagnetisch, beispielsweise unter Nutzung einer ein Magnetfeld erzeugenden Spule, oder piezoelektrisch betrieben werden. Weitere Alternativen können auch zwangsgeführt ausgeführt sein, beispielsweise Nocken- oder Kolben-Pleuelantriebe. Die durch das jeweilige Antriebsmittel erzeugte Bewegung wird auf das zugehörige Verdichterelement übertragen, welches zu diesem Zweck mit dem Antriebsmittel fest verbunden ist.

Die Verdichterelemente einer Verdichteranordnung können beispielsweise parallel zueinander und in einem Winkel von 90 Grad zum Baufeld, das heißt zu der in Richtung der Verdichterelemente weisenden Fläche, nachfolgend kurz Oberfläche genannt, der aufgetragenen Schicht partikelförmigen Baumaterials bzw. Partikelmaterials, ausgerichtet angeordnet werden.

In einer Alternative ist es vorgesehen, dass die Verdichterelemente einer Verdichteranordnung parallel zueinander und in einem Winkel abweichend von 90 Grad zum Baufeld ausgerichtet angeordnet werden. Derart ist eine Ausrichtung der Verdichterelemente schräg zum Baufeld möglich. Die Abweichung aus der Lotsenkrechten über dem Baufeld kann beispielsweise 0,1 Grad bis 15 Grad betragen.

Die Länge eines eine Klinge mit einer Schneide aufweisenden Verdichterelements kann sich über die gesamte Breite des Baufelds erstrecken. Die Abmessungen eines Verdichtungselements können beispielsweise mit einer Länge von 500 mm, einer Breite von 3 mm sowie einer Höhe von 30 mm angegeben werden.

Vorgesehen ist, dass die Verdichteranordnung mit ihren Verdichterelementen beispielsweise über einem Baufeld angeordnet wird, wobei die Verdichteranordnung über dem Baufeld beweglich angeordnet ist und wie im Stand der Technik üblich, zumindest in einer X- und einer Y-Richtung über dem Baufeld bewegt werden kann. Zum Ermöglichen des schichtweisen Aufbaus ist vorgesehen, dass die Verdichteranordnung auch in Z-Richtung über dem Baufeld, von diesem weg bzw. zu diesem hin, bewegbar ist. Alternativ kann auch vorgesehen werden, dass das Baufeld in einer Z-Richtung bewegbar angeordnet ist. Das heißt, dass der Abstand des Baufelds gegenüber der Verdichteranordnung vergrößert oder verkleinert werden kann.

In einer anderen Ausführung der Verdichteranordnung ist vorgesehen, dass die Verdichterelemente in unterschiedlichen Winkeln zueinander angeordnet sind. Beispielsweise können drei Verdichterelemente derart angeordnet sein, dass das mittlere Verdichterelement lotsenkrecht (90 Grad) über dem Baufeld angeordnet ist, während ein erstes benachbartes Verdichterelement einen Winkel über 90 Grad und ein zweites benachbartes Verdichterelement einen Winkel unter 90 Grad aufweist. Beispielsweise können die Winkel 89, 90 und 91 Grad oder 88, 90 und 92 Grad betragen, wobei die zum Verdichten des partikelförmigen Baumaterials vorgesehenen Enden der Verdichterelemente oder Messer nahe beieinanderliegend über dem Baufeld angeordnet sind.

Zur Optimierung der Wirkung der messerförmigen Verdichterelemente auf der Oberfläche des partikelförmigen Baumaterials beim Verdichten des Baumaterials an den vorgesehenen Stellen werden die Verdichterelemente mit mindestens einer Struktur versehen. Eine derartige Struktur ist an dem Ende des Verdichterelements vorgesehen, welches mit dem partikelförmigen Baumaterial in Berührung kommt.

Eine derartige Struktur kann beispielsweise eine konkave Form aufweisen. Alternativ kann eine Struktur auch konvex, wellenförmig oder sägezahnförmig ausgeführt werden, wobei keine Beschränkung auf die hier genannten Formen der Struktur besteht. Die Form der Struktur kann von einem Fachmann an Vorgaben und Gegebenheiten angepasst werden.

Vorgesehen ist es auch, dass ein Verdichterelement an seinem dafür vorgesehenen Ende zwei Strukturen aufweist. Die beiden Strukturen können in Form und Größe gleich oder unterschiedlich ausgeführt werden. Durch diese Strukturen werden an den Enden der Verdichterelemente Schneiden ausgebildet, welche beim Verdichten des partikelförmigen Baumaterials mit diesem in Kontakt treten, nachfolgend auch Kontaktstellen genannt, während andere Bereiche am Ende des Verdichterelements nicht mehr mit dem Baumaterial in Berührung kommen.

Bei einem eine Klinge mit mindestens einer Schneide aufweisenden Verdichterelement kann eine Schneide mittels eines wie bei einem Messer üblichen, beispielsweise V-förmigen Anschliffs am Ende des Verdichterelements ausgebildet werden. In einer Alternative kann eine Schneide oder können mehrere Schneiden an einem Verdichterelement am Ende des Verdichterelements durch das Einbringen einer oder mehrerer beispielsweise eine konkave Form aufweisenden Strukturen am Ende des Verdichterelements ausgebildet werden. Hierbei ist vorgesehen, dass sich eine derartige Struktur in einer Längserstreckung des Verdichterelements erstreckt. Sind an einem Verdichtungselement mehrere Schneiden ausgebildet, ist die Breite jeder Schneide in den oben beschriebenen Dimensionen ausgebildet, so dass beim Verdichten ein Kontakt, dass heißt eine Krafteinleitung auf die Oberfläche des partikelförmigen Baumaterials bzw. Partikelmaterials stets auf einen sehr schmalen Bereich beschränkt wird, welcher in der Größenordnung eines Partikels oder einiger weniger Partikel des partikelförmigen Baumaterials bzw. Partikelmaterials liegt.

Vorgesehen ist, dass die Verdichterelemente unabhängig voneinander, gesteuert durch ihr jeweiliges Antriebsmittel, bewegt werden können. Somit können sich die Verdichterelemente gleich oder unterschiedlich bewegen.

Beispielsweise kann ein erstes Verdichterelement in die Richtung des Baufelds bewegt werden, während zeitgleich ein zweites Verdichterelement in einer Richtung vom Baufeld wegbewegt wird oder umgekehrt.

Vorgesehen ist auch, jedes Antriebsmittel und somit jedes Verdichterelement mit einer eigenen Frequenz für seine Hin- und Herbewegung anzusteuern. Neben der Frequenz kann auch die Amplitude, also der Weg der Hin- und Herbewegung, individuell eingestellt werden.

Darüber hinaus ist auch die Form der das Antriebsmittel ansteuernden Wellen-form, wie beispielsweise eine Sinuswelle, einer Steuerspannung einstellbar. Die Wahl der Wellenform beeinflusst die Form der Bewegung des Verdichterelements entsprechend. Als Wellenformen können beispielsweise auch ein Sägezahn oder mäanderförmige Wellenformen genutzt werden.

Vorgesehen ist, dass eine Trennung oder Separation zwischen dem Vorgang des Ausbringens von partikelförmigem Baumaterial und dem Verdichten des partikelförmigen Baumaterials erreicht wird. Eine gegenseitige Beeinflussung beider Vorgänge wird derart ausgeschlossen.

Die zuvor erläuterten Merkmale und Vorteile dieser Erfindung sind nach sorgfältigem Studium der nachfolgenden ausführlichen Beschreibung der hier bevorzugten, nicht einschränkenden Beispielausgestaltungen der Erfindung mit den zugehörigen Zeichnungen besser zu verstehen und zu bewerten, welche zeigen:
- Fig. 1:: eine Ausführungsform der Verdichteranordnung mit drei Verdichterelementen,
- Fig. 2a, 2b, 2c:: eine Darstellung verschiedener Bewegungsabläufe der Verdichteranordnung aus Figur 1,
- Fig. 3:: eine auszugsweise vergrößerte Darstellung der Enden der Verdichterelemente, welche jeweils zwei Strukturen aufweisen,
- Fig. 4:: eine weitere auszugsweise vergrößerte Darstellung eines Endes eines Verdichterelements,
- Fig. 5a:: eine Ausführungsform mit fünf parallel zueinander angeordneten Verdichterelementen mit einer Ausrichtung der Verdichtungselemente abweichend von einer Lotsenkrechten über dem Baufeld,
- Fig. 5b:: eine vergrößerte Darstellung des Bereichs der Enden der fünf Verdichtungselemente nach Figur 5a,
- Fig. 6a:: eine alternative Ausführungsform mit drei in verschiedenen Winkeln über dem Baufeld angeordneten Verdichterelementen und
- Fig. 6b:: eine vergrößerte Darstellung des Bereichs der Enden der Verdichtungselemente nach Figur 6a.

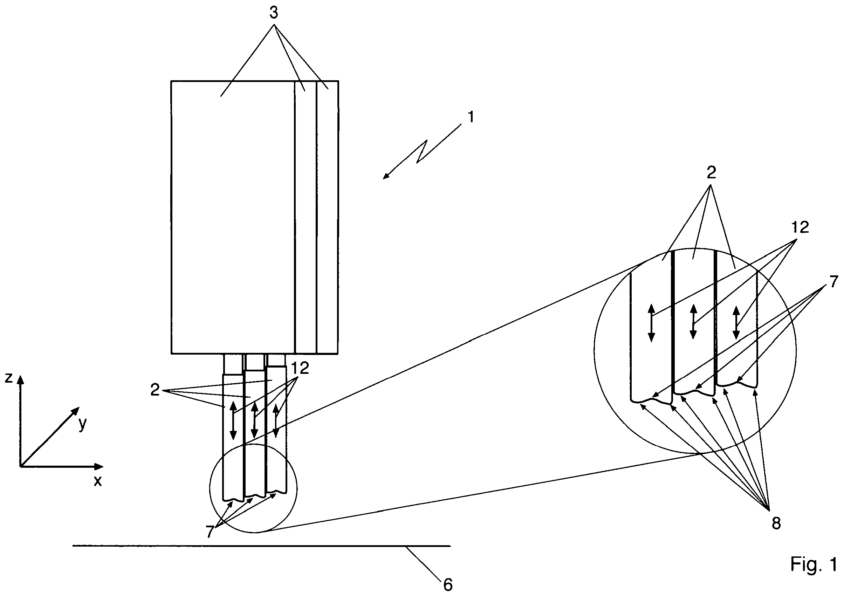

Die Figur 1 zeigt eine Verdichteranordnung 1, welche über einer Oberfläche eines Baufelds 6 angeordnet ist. Vorgesehen ist, dass die Verdichteranordnung 1 mindestens in einer X-Richtung und in einer Y-Richtung über dem Baufeld 6 verfahrbar angeordnet ist. Die hierfür notwendigen mechanischen Mittel sowie eine die Bewegung steuernde Steuereinheit sind in der Figur 1 nicht dargestellt. Hierfür können übliche, aus dem Stand der Technik bekannte Lösungen zum Einsatz kommen. Zur Gewährleistung eines schichtweisen Aufbaus des zu erzeugenden 3D-Modells ist außerdem vorgesehen, dass die Verdichteranordnung 1 auch in einer Z-Richtung verfahren oder bewegt werden kann. Alternativ ist bekannt, dass auch das Baufeld in einer X-Richtung, einer Y-Richtung und optional in einer Z-Richtung bewegbar ausgeführt sein kann.

Die Verdichteranordnung 1 weist drei Antriebsmittel 3 auf. Vorgesehen ist, dass ein Antriebsmittel 3 mit jeweils einem Verdichterelement 2 verbunden ist und dieses somit individuell gesteuert oder bewegt werden kann.

Diese Möglichkeit der voneinander unabhängigen, individuellen Steuerung der Verdichterelemente 2 ermöglicht es, dass die Verdichterelemente 2 gleich angesteuert und somit gleich bewegt oder unterschiedlich angesteuert und somit unterschiedlich bewegt werden können.

Die in der Figur 1 in den Verdichterelementen 2 dargestellten Doppelpfeile zeigen die Bewegungsrichtungen 12 des jeweiligen Verdichterelements 2 an, welches in einer sogenannten Hin- und Herbewegung linear bzw. längsaxial bewegt wird. Die in der Figur 1 beispielhaft gezeigten Bewegungsrichtungen 12 der Verdichterelemente 2 liegen parallel zueinander. Für den Fall, dass in der vorliegenden Beschreibung ein spezieller Zeitpunkt der Bewegung eines Verdichterelements 2 gemeint ist, wird die aktuelle Bewegungsrichtung 12 nur mit einem einfachen Pfeil dargestellt und zeigt, in welche Richtung sich das Verdichterelement 2 momentan bewegt.

Die in der Figur 1 gezeigten Verdichterelemente 2 sind in verschiedenen Positionen auf ihrem möglichen Bewegungsweg dargestellt. Dies ist durch die verschiedenen Längen der Verdichterelemente 2 bzw. durch die unterschiedlichen Abstände der Enden 7 der Verdichterelemente 2 vom Baufeld 6 gezeigt.

Am Ende 7 jedes Verdichterelements 2 sind Kontaktstellen 8 ausgebildet, die mit dem partikelförmigen Baumaterial, welches als eine dünne Schicht zumindest teilweise auf dem Baufeld 6 aufgebracht wird, in Berührung kommen. Für ein besseres Erkennen der Gestaltung der Enden 7 der Verdichterelemente 2 mit den Kontaktstellen 8 sind diese zusätzlich in der Figur 1 in einer lupenähnlichen Darstellung vergrößert gezeigt.

Durch eine ausreichend schnelle Bewegung des Verdichterelements 2 in den mit den Doppelpfeilen dargestellten Richtungen, also mit einer hohen Frequenz, kann das partikelförmige Baumaterial an den dafür vorgesehenen Stellen verdichtet werden. Dieses Verdichten des partikelförmigen Baumaterials an den vorgesehenen Stellen in einer ersten Schicht erfolgt während die Verdichteranordnung 1 über dem Baufeld 6 beispielsweise in der X-Richtung bewegt wird. Erfolgt die Ansteuerung und Auslenkung der Verdichterelemente 2 entsprechend schnell, also mit einer hohen Frequenz, wird eine sehr gute und schnelle Verdichtung des partikelförmigen Baumaterials erreicht. Die Formung oder Gestaltung einer Schicht und somit der gesamten 3D-Struktur ist gemessen an üblichen 3D-Druckverfahren in einer kürzeren Zeit möglich. Der Grund für die Erhöhung der Herstellungsgeschwindigkeit einer 3D-Struktur liegt darin, dass bei der nur linearen Bewegung der Verdichterelemente auf mechanische Bauteile, beispielsweise zur Lenkung oder Umlenkung einer Bewegung, verzichtet werden kann.

Aus dem Stand der Technik übliche Mittel zur Bevorratung und Aufbringung des partikelförmigen Baumaterials können mit der Erfindung gemeinsam genutzt werden. Ebenso ist der Einsatz eines Bindemittels möglich und vorgesehen.

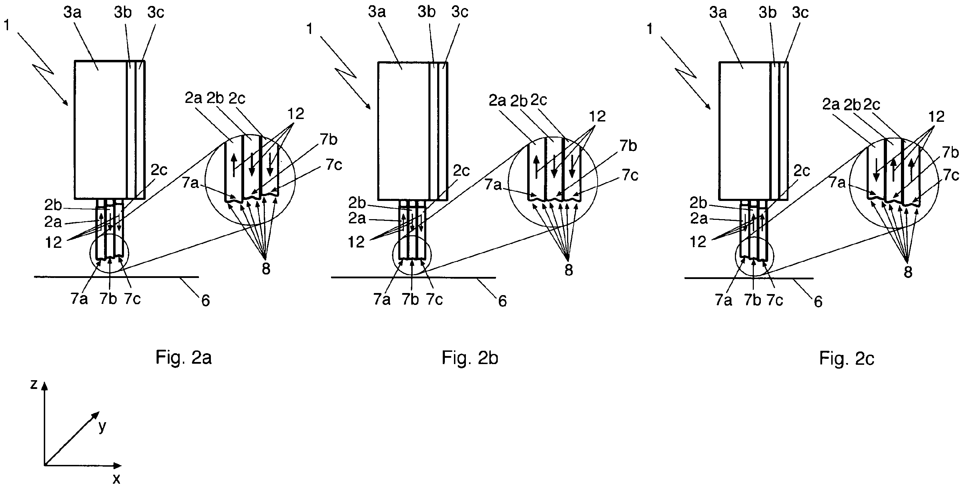

In den Figuren 2a, 2b und 2c ist die aus der Figur 1 bereits bekannte Verdichteranordnung 1 mit beispielsweise drei Verdichterelementen 2 in verschiedenen Betriebszuständen dargestellt. Zur Unterscheidung der einzelnen Verdichterelemente werden diese mit den Bezugsziffern 2a für das erste Verdichterelement 2a, 2b für das zweite Verdichterelement 2b und 2c für das dritte Verdichterelement 2c bezeichnet.

In einem ersten Betriebszustand in der Figur 2a ist ein Zustand dargestellt, bei welchem das erste Verdichterelement 2a seine maximale Auslenkung, also seine kürzeste Entfernung zum Baufeld 6, erreicht hat und das nicht in der Figur 2a gezeigte partikelförmige Baumaterial im Bereich zwischen den Kontaktstellen 8 des ersten Endes 7a des ersten Verdichterelements 2a und dem Baufeld 6 entsprechend verdichtet worden ist. Für ein besseres Erkennen der Gestaltung der Enden 7a, 7b und 7c der Verdichterelemente 2a, 2b und 2c sind diese in den Figuren 2a, 2b und 2c jeweils in einer lupenähnlichen Darstellung vergrößert gezeigt.

In dem dargestellten Betriebszustand bewegt der erste Antrieb 3a das erste Verdichterelement 2a in eine Richtung, in welcher der Abstand zwischen dem ersten Verdichterelement 2a und dem Baufeld 6 stetig größer wird. Diese Bewegungsrichtung 12 ist mit dem zum Antriebsmittel 3a nach oben gerichteten Pfeil dargestellt. Zur gleichen Zeit werden das zweite Verdichterelement 2b durch das zweiten Antriebsmittel 3b und das dritte Verdichterelement 2c durch das dritte Antriebsmittel 3c in die Richtung des Baufelds 6 bewegt. Gezeigt ist, dass das zweite Verdichterelement 2b einen geringeren Abstand zum Baufeld 6 aufweist als das dritte Verdichterelement 2c. Somit kann davon ausgegangen werden, dass die Kontaktstellen 8 des zweiten Endes 7b als Nächstes das partikelförmige Baumaterial auf der Oberfläche des Baufelds 6 erreichen und das partikelförmige Baumaterial an den Kontaktstellen 8 verdichtet wird, bevor die Kontaktstellen 8 des dritten Endes 7c des dritten Verdichterelements 2c ihren Verdichtungsvorgang ausführen.

Während des punktuellen Verdichtens des partikelförmigen Baumaterials auf der Oberfläche des Baufelds 6 durch die drei Verdichterelemente 2a, 2b und 2c wird das Baufeld 6 in der X- und/oder Y-Richtung bewegt. Alternativ kann die Verdichteranordnung 1 über dem Baufeld 6 bewegt werden.

In der Figur 2b ist ein zweiter Betriebszustand dargestellt, bei welchem sich das erste Verdichterelement 2a weiter vom Baufeld 6 wegbewegt hat, während das zweite und das dritte Verdichterelement 2b und 2c ihre Bewegung in Richtung des Baufelds 6 weiter fortgesetzt haben. Die Bewegungsrichtungen 12 der Verdichterelemente sind in der Figur 2a und 2b also gleich. Die Kontaktstellen 8 des zweiten Endes 7b des zweiten Verdichterelements 2b haben das partikelförmige Baumaterial auf der Oberfläche des Baufelds 6 erreicht und verdichten das partikelförmige Baumaterial an den Kontaktstellen 8 entsprechend.

Nachdem das Ende 7b des zweiten Verdichterelements 2b den Verdichtungsvorgang ausgeführt hat, wird die Bewegungsrichtung 12 des zweiten Verdichterelements 2b, welches durch das zweite Antriebsmittel 3b bewegt wird, umgekehrt, wobei sich der Abstand des zweiten Endes 7b zum Baufeld 6 vergrößert. Zeitgleich setzen das erste Verdichterelement 2a und das dritte Verdichterelement 2c ihre Bewegung in der jeweils unveränderten Bewegungsrichtung 12 fort.

In der Figur 2c ist ein dritter Betriebszustand dargestellt, bei welchem die Kontaktstellen 8 des dritten Endes 7c des dritten Verdichterelements 2c das partikelförmige Baumaterial auf der Oberfläche des Baufelds 6 erreicht haben und das partikelförmige Baumaterial an den Kontaktstellen 8 entsprechend verdichten. Nach diesem Verdichtungsvorgang wird die Bewegungsrichtung 12 des dritten Verdichterelements 2c, welches durch das dritte Antriebsmittel 3c bewegt wird, umgekehrt, wobei sich der Abstand des dritten Endes 7c zum Baufeld 6 vergrößert. Zu diesem Zeitpunkt setzt das zweite Verdichterelement 2b seine Bewegung, weg vom Baufeld 6, fort. Das erste Verdichterelement 2a hat seine maximale Entfernung zum Baufeld 6 erreicht und kehrt seine Bewegungsrichtung 12 um, wobei es sich jetzt wieder in Richtung des Baufelds 6 bewegt und somit der Abstand zwischen dem ersten Ende 7a des ersten Verdichterelements 2a und dem Baufeld 6 abnimmt. Dieser beschriebene Betriebszustand ist in der Figur 2c mittels der jeweiligen Pfeile in den Verdichterelementen 2a, 2b und 2c dargestellt.

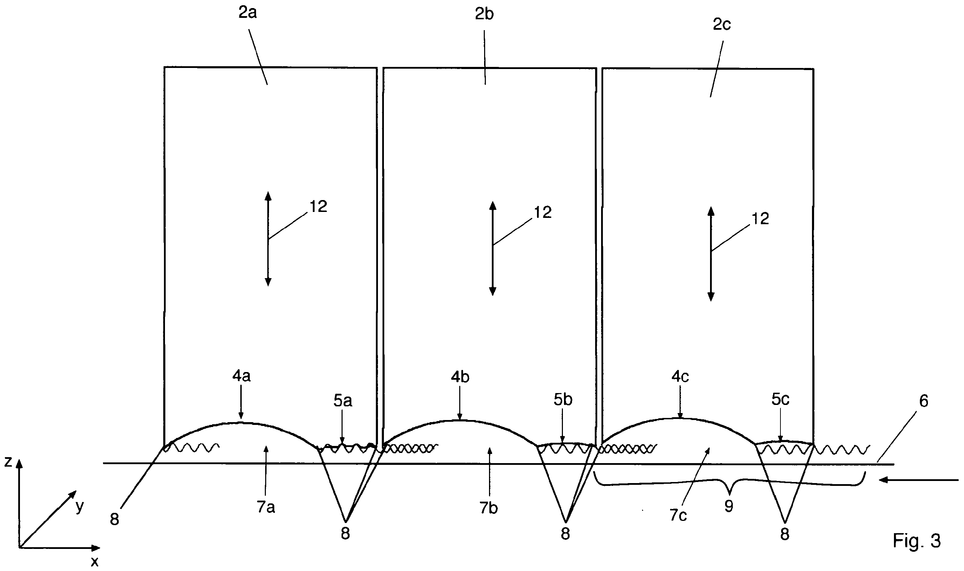

Die Figur 3 zeigt eine auszugsweise vergrößerte Darstellung der Enden 7a, 7b und 7c der Verdichterelemente 2a, 2b und 2c. Diese Darstellung entspricht einer Seitenansicht bzw. einer Schnittdarstellung der Verdichterelemente 2a, 2b und 2c. Im Beispiel der Figur 3 sind die Verdichterelemente 2a, 2b und 2c und ihre Bewegungsrichtungen 12 parallel zueinander ausgerichtet. Wie in der vergrößerten Darstellung der Enden 7a, 7b und 7c zu erkennen ist, weisen diese jeweils eine erste Struktur 4 und eine zweite Struktur 5 auf. Die Strukturen 4 und 5 sind jeweils in einer konkaven Form ausgeführt, wobei sich die Strukturen 4 und 5 in ihrer Größe und ihrem Radius unterscheiden. Die Verdichtung des partikelförmigen Baumaterials findet vorzugsweise an den durch die Strukturen 4 und 5 ausgebildeten Kontaktstellen 8 statt. Vorgesehen ist, dass sich die Verdichterelemente 2a, 2b und 2c in den mit den Doppelpfeilen dargestellten Richtungen bewegen, während das Baufeld 6 beispielsweise in der mit dem Pfeil gezeigten Richtung, in der Figur 3 nach links, verfahren wird.

In der Figur 3 ist an den Kontaktstellen 8 jeweils eine Kurve dargestellt, welche eine Wellenform aufweist. Diese Kurve soll den Verlauf der Bewegung der Kontaktstellen 8 über ein entsprechendes Zeitfenster und über dem Baufeld 6 darstellen. Dieser Verlauf entsteht durch die Überlagerung der Hin- und Herbewegung der Verdichterelemente 2a, 2b und 2c (Doppelpfeil) und der Verfahrbewegung (einfacher Pfeil) des Baufelds 6. Die dargestellte Wellenform bildet somit den Verdichtungsvorgang auf der Oberfläche des Baufelds 6 ab und zeigt, dass das partikelförmigen Baumaterial mit einem Verdichterelement 2a, 2b und 2c gleichzeitig an drei verschiedenen Stellen bzw. Kontaktstellen 8 verdichtet wird.

Durch das Verfahren des Baufelds 6 beispielsweise in der in der Figur 3 dargestellten Richtung wird ein Bereich 9 auf der Oberfläche des Baufelds 6 zuerst durch drei Kontaktstellen 8 des Verdichterelements 2c durch die Hin- und Herbewegung des Verdichterelements 2c in seiner Bewegungsrichtung 12 mehrfach verdichtet. Somit erfolgt mittels eines Verdichterelements 2c bereits eine Mehrfachverdichtung, im Beispiel an drei verschiedenen Kontaktstellen 8 innerhalb des Bereichs 9.

Nachfolgend wird dieser Bereich 9 durch das Verdichterelement 2b erreicht. Auch durch die drei Kontaktstellen 8 des Verdichterelements 2b erfolgt eine mehrfache Verdichtung des partikelförmigen Baumaterials im Bereich 9. Nachdem das Verdichterelement 2b den Bereich 9 überfahren hat, erreicht das Verdichterelement 2a den Bereich 9. Auch durch die drei Kontaktstellen 8 des Verdichterelements 2a erfolgt eine mehrfache Verdichtung des partikelförmigen Baumaterials im Bereich 9. Somit sind die Partikel 11 des partikelförmigen Baumaterials im Bereich 9 mehrfach verdichtet worden, was einen schnellen und soliden schichtweisen Aufbau der 3D-Struktur ermöglicht.

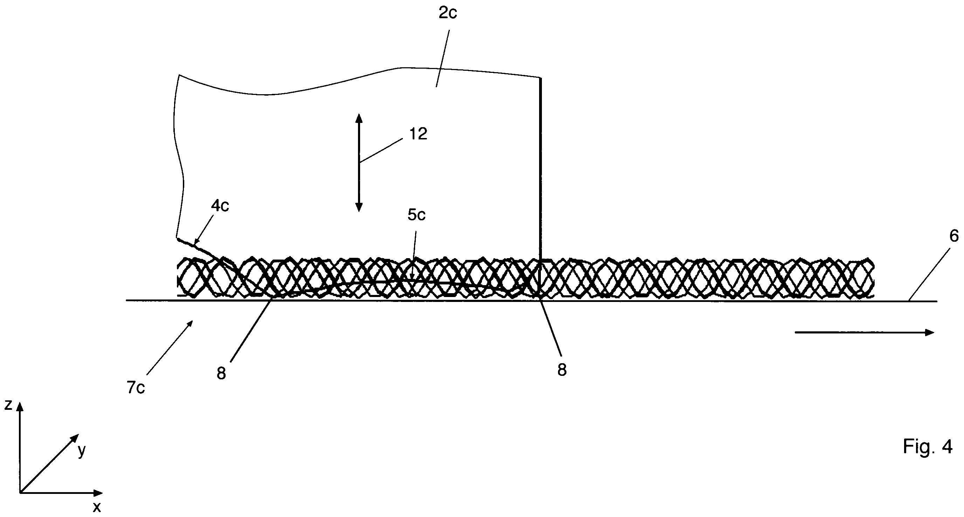

In der Figur 4 ist eine weitere auszugsweise vergrößerte Darstellung eines Endes 7c eines Verdichterelements 2c mit beispielhaft zwei Kontaktstellen 8 gezeigt. Das Ende 7c des Verdichterelements 2c weist eine erste konkave Struktur 4c auf, welche nur teilweise dargestellt ist. Das Ende 7c weist auch eine zweite konkave Struktur 5c auf, welche einen größeren Radius als die erste konkave Struktur 4c aufweist.

Die Figur 4 zeigt auch ein Baufeld 6, welches in der mit dem Pfeil angegebenen Richtung unter dem Verdichterelement 2c bewegt oder verfahren wird. Der Verdichtungsvorgang des nicht gezeigten partikelförmigen Baumaterials auf der Oberfläche des Baufelds 6 durch die zwei dargestellten Kontaktstellen 8 sowie durch die nicht dargestellten Kontaktstellen 8 ist mit Hilfe mehrerer wellenförmiger Kurven über der Oberfläche des Baufelds 6 gezeigt. Neben den zwei dargestellten Kontaktstellen 8 des Verdichterelements 2c sind auch die nicht dargestellte Kontaktstelle 8 des Verdichterelements 2c sowie auch die nicht dargestellten Kontaktstellen 8 der Verdichterelemente 2a und 2b am Verdichtungsvorgang beteiligt.

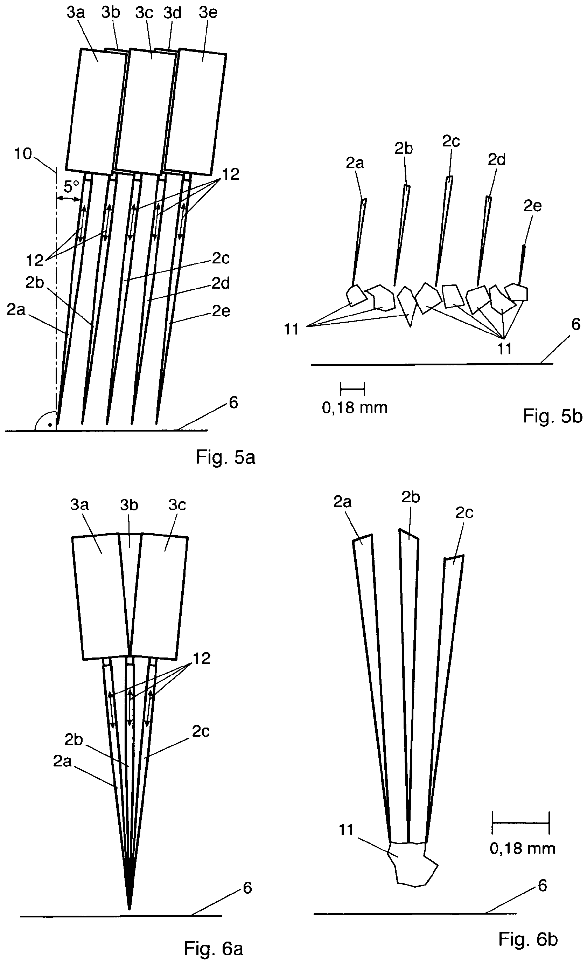

In der Figur 5a ist eine Ausführungsform der Erfindung mit fünf parallel zueinander angeordneten Verdichterelementen 2a, 2b, 2c, 2d und 2e gezeigt. In dieser Variante sind die Verdichterelemente 2a, 2b, 2c, 2d und 2e abweichend von einer Lotsenkrechten 10 über dem Baufeld 6 in einem Winkel von beispielsweise 5 Grad zur Lotsenkrechte 10 ausgerichtet angeordnet.

Die Klingen der Schneiden der Verdichterelemente 2a, 2b, 2c, 2d und 2e sind mit einem beispielsweise V-förmigen Anschliff am jeweiligen Ende des jeweiligen Verdichterelements 2a, 2b, 2c, 2d und 2e ausgebildet. Die Verdichterelemente 2a, 2b, 2c, 2d und 2e sind mit ihren in der Figur 5a nicht dargestellten Antriebsmitteln 3a, 3b, 3c, 3d und 3e verbunden und werden durch diese in der oben beschriebenen linearen Hin- und Herbewegung in einer linearen Bewegungsrichtung 12 parallel zueinander bewegt. Die Bewegungsrichtungen 12 der Verdichterelemente 2a, 2b, 2c, 2d und 2e sind in der Figur 5a mittels der fünf Doppelpfeile dargestellt.

In der Figur 5b ist eine vergrößerte Darstellung des Bereichs der Enden der Verdichterelemente 2a, 2b, 2c, 2d und 2e nach Figur 5a gezeigt. In dieser Darstellung der Figur 5b sind einige Partikel 11 des partikelförmigen Baumaterials in einer Ebene über dem Baufeld 6 dargestellt. Deutlich zu erkennen ist, dass die Breite einer Schneide eines Verdichterelements 2a, 2b, 2c, 2d und 2e an dem Ende der Schneide, welche bei dem Verdichtungsvorgang mit den Partikeln 11 des partikelförmigen Baumaterials in Kontakt steht, derart gewählt worden ist, dass diese Breite kleiner als der Durchmesser eines Partikels 11 des partikelförmigen Baumaterials ausgeführt wurde. Somit kann eine Schneide eines Verdichterelements 2a, 2b, 2c, 2d und 2e gezielt ein Partikel 11 verdichten, während benachbarte Partikel 11 des partikelförmigen Baumaterials von diesem Verdichtungsvorgang nicht betroffen sind. Zum Vergleich ist in der Figur 5b eine Abmessung von 0,18 mm angegeben. Diese Abmessung entspricht beispielsweise etwa dem Durchmesser eines Partikels 11 des partikelförmigen Materials.

Durch eine entsprechende Bewegung der Verdichteranordnung 1 über dem Baufeld 6 kann erreicht werden, dass ein Partikel 11 nachfolgend von allen drei Schneiden der Verdichterelemente 2a, 2b, 2c, 2d und 2e verdichtet wird. Hierfür werden die Verfahrgeschwindigkeit der Verdichteranordnung 1 über dem Baufeld 6 und die Frequenzen der Signale zum Ansteuern der Antriebsmittel 3a, 3b, 3c, 3d und 3e entsprechend gewählt bzw. aufeinander abgestimmt.

Durch die Anordnung der Verdichterelemente 2a, 2b, 2c, 2d und 2e in einem entsprechenden Winkel (Schrägstellung) wird einem Verschieben der Partikel 11 des partikelförmigen Baumaterials über dem Baufeld 6 beispielsweise in einer Verfahrrichtung der Verdichteranordnung 1 entgegengewirkt.

Vorgesehen ist auch, den Winkel der Ausrichtung der Verdichterelemente 2a, 2b, 2c, 2d und 2e über dem Baufeld 6 verstellbar auszuführen. Somit kann eine Änderung des Winkels im laufenden Betrieb vorgenommen werden.

Vorgesehen ist auch, die Verdichterelemente 2a, 2b, 2c, 2d und 2e über dem Baufeld 6 nach verschiedenen Winkeln ausgerichtet anzuordnen und hierbei den Abstand der Klingen der drei Schneiden der Verdichterelemente 2a, 2b, 2c, 2d und 2e zueinander beizubehalten, wonach die Ausrichtung der Verdichterelemente 2a, 2b, 2c, 2d und 2e zueinander nicht mehr parallel ist. So kann beispielsweise für das Verdichterelement 2a ein Winkel von 0 Grad, für das Verdichterelement 2b ein Winkel von 2 Grad, für das Verdichterelement 2c ein Winkel von 4 Grad, für das Verdichterelement 2d ein Winkel von 6 Grad und für das Verdichterelement 2e ein Winkel von 8 Grad gewählt werden. Diese Ausführung ist in den Figuren nicht dargestellt.

In der Figur 6a ist eine alternative Ausführungsform mit drei Verdichterelementen 2a, 2b und 2c gezeigt, welche in verschiedenen Winkeln über dem Baufeld 6 angeordnet sind. Im Gegensatz zur Darstellung der Figur 5a sind die Verdichterelemente 2a, 2b und 2c nicht parallel zueinander ausgerichtet angeordnet. Die Anordnung der Verdichterelemente 2a, 2b und 2c erfolgt in dieser Ausführungsform derart, dass die Klingen der Schneiden der Verdichterelemente 2a, 2b und 2c mit einem beispielsweise V-förmigen Anschliff auf einen gemeinsamen Punkt hin ausgerichtet angeordnet sind. Derart wird es möglich, dass alle drei Verdichterelemente 2a, 2b und 2c mit ihren Schneiden einen Partikel 11 treffen und verdichten können.

Dieser Fall ist in der vergrößerten Darstellung des Bereichs der Schneiden an den Enden der Verdichtungselemente 2a, 2b und 2c in der Figur 6b dargestellt. In einem derartigen Fall, in welchem alle drei Schneiden einen Partikel 11 des partikelförmigen Baumaterials treffen, kann auch vorgesehen werden, dass die Verdichtung beispielsweise durch das zweite Verdichterelement 2b vorgenommen wird, während das erste Verdichterelement 2a und das dritte Verdichterelement 2c den Partikel an der aktuellen Stelle fixieren. Zum Vergleich ist in der Figur 6b eine Abmessung von 0,18 mm angegeben. Diese Abmessung entspricht beispielsweise dem Durchmesser eines Partikels 11 des partikelförmigen Materials.

Zusätzlich kann eine Schrägstellung der Verdichteranordnung 1 mit den drei Verdichterelementen 2a, 2b und 2c vorgenommen werden, um Störungen des Verdichtungsvorgangs durch eine Fahrbewegung der Verdichteranordnung 1 über dem Baufeld 6 entgegenzuwirken. Die besonderen Vorteile der vorliegenden Anordnung sowie des Verfahrens zur Erzeugung einer 3D-Struktur sind nachfolgend aufgeführt:
- Die Verdichterelemente führen eine lineare Bewegung in der Bewegungsrichtung 12 zur Verdichtung des schichtweise aufzubringenden partikelförmigen Baumaterials aus.
- Die lineare Bewegung der Verdichterelemente kann in einem einstellbaren Winkel zur Fahrtrichtung des Baufelds stehen.
- Die Verdichterelemente können parallel zueinander oder in einem Winkel zueinander angeordnet werden.
- Anordnung mehrerer Verdichterelemente in einer Verdichteranordnung mit einem jeweils separaten Antriebsmittel.
- Ansteuerung der Antriebsmittel der Verdichterelemente mit einer wählbaren Verdichter-Frequenz.
- Ansteuerung der Antriebsmittel mit einer wählbaren Kurvenform der das Antriebsmittel ansteuernden Spannung oder des Stroms.
- Ausführung der Verdichterelemente mit einer oder mehreren Strukturen am Ende des Verdichterelements, welches beim Verdichten mit dem partikelförmigen Baumaterial in Kontakt steht.
- Ausführung der Strukturen in einer konvexen-, konkaven-, sägezahnartigen oder Wellen-Form.
- Anwendung des Verfahrens zur Erzeugung einer 3D-Struktur im Bereich der Herstellung von Gießkernen, beispielsweise zur Fertigung von Gussteilen im Bereich des Anlagen- und Fahrzeugbaus.
- Durch Verringerung der zu bewegenden Masse eines Verdichterelements kann dieses mit einer hohen Frequenz bewegt werden und außerdem die Partikel des partikelförmigen Baumaterials mehrfach verdichten.
- Die höhere Frequenz beim Verdichten ermöglicht eine größere Verfahrgeschwindigkeit beispielsweise des Baufelds.
- Trennung von Verdichtung und Auftrag des partikelförmigen Baumaterials.
- Einsatz unterschiedlicher Strukturen je Verdichterelement zur Optimierung der Verdichtung des partikelförmigen Baumaterials.

### LISTE DER BEZUGSZEICHEN

- 1: Verdichteranordnung
- 2, 2a, 2b, 2c, 2d, 2e: Verdichterelement
- 3, 3a, 3b, 3c, 3d, 3e: Antriebsmittel
- 4, 4a, 4b, 4c: erste Struktur
- 5, 5a, 5b, 5c: zweite Struktur
- 6: Baufeld
- 7, 7a, 7b, 7c: Ende des Verdichterelements
- 8: Kontaktstelle
- 9: Bereich
- 10: Lotsenkrechte
- 11: Partikel des partikelförmigen Baumaterials
- 12: Bewegungsrichtung Verdichterelement (linear, längsaxial)

## Patentansprüche

1. System zur Erzeugung einer 3D-Struktur, umfassend ein aus Partikeln mit einem Durchmesser bestehendes partikelförmiges Baumaterial, eine Verdichteranordnung (1) mit einem Mittel zum Verdichten des schichtweise aufzubringenden partikelförmigen Baumaterials und ein mit dem Mittel zum Verdichten verbundenes und das Mittel zum Verdichten in eine lineare Bewegung versetzendes Antriebsmittel (3), wobei in der Verdichteranordnung (1) zum Verdichten des schichtweise aufzubringenden partikelförmigen Baumaterials ein eine Klinge mit mindestens einer Schneide aufweisendes Verdichterelement (2) angeordnet ist und wobei die Breite einer Schneide an einem Ende der Schneide, welches bei einem Verdichtungsvorgang mit Partikeln (11) eines partikelförmigen Baumaterials in Kontakt steht, in einem Bereich zwischen 0,1-mal bis 3-mal dem Durchmesser eines Partikels des partikelförmigen Baumaterials liegt.

2. System nach Anspruch 1, **dadurch gekennzeichnet, dass** die Breite einer Schneide bevorzugt in einem Bereich zwischen 0,3-mal bis 2-mal, besonders bevorzugt in einem Bereich zwischen 0,5-mal bis 1-mal, dem Durchmesser des Partikels des partikelförmigen Baumaterials liegt.

3. System nach Anspruch 1 oder 2, **dadurch gekennzeichnet, dass** das Antriebsmittel (3) ein elektrisch oder elektromagnetisch oder piezoelektrisch oder elektrohydraulisch oder pneumatisch angetriebenes Antriebsmittel (3) ist.

4. System nach einem der Ansprüche 1 bis 3, **dadurch gekennzeichnet, dass** die Verdichteranordnung (1) mit ihrem Verdichterelement (2) in Bezug zu einem Baufeld (6), auf welchem ein schichtweiser Aufbau der zu erzeugenden 3D-Struktur (1) erfolgt, über dessen Oberfläche bewegbar angeordnet ist.

5. System nach einem der Ansprüche 1 bis 4, **dadurch gekennzeichnet, dass** mehrere je mindestens eine Schneide aufweisende Verdichterelemente (2) in der Verdichteranordnung (1) angeordnet sind.

6. System nach Anspruch 5, **dadurch gekennzeichnet, dass** die Verdichterelemente (2) parallel zueinander in einem gleichen Winkel oder in jeweils unterschiedlichen Winkeln gegenüber dem Baufeld (6) angeordnet sind.

7. System nach einem der Ansprüche 1 bis 6, **dadurch gekennzeichnet, dass** an den Enden (7) der Verdichterelemente (2) mindestens je eine Struktur (4, 5) angeordnet ist.

8. Verfahren zur Erzeugung einer 3D-Struktur, bei welchem eine Schicht eines aufzubringenden partikelförmigen Baumaterials über einem Baufeld (6) bereitgestellt wird, wobei das partikelförmige Baumaterial zumindest teilweise verdichtet wird und durch einen partiellen physikalischen oder chemischen Härtungsprozess oder einen Schmelzprozess in einem schichtweisen Aufbau die 3D-Struktur entsteht, wobei das Verdichten des partikelförmigen Baumaterials mittels eines in einer Verdichteranordnung (1) angeordneten, eine Klinge mit mindestens einer Schneide aufweisenden Verdichterelements (2), dessen Breite einer Schneide an einem Ende der Schneide, welches bei einem Verdichtungsvorgang mit Partikeln (11) eines partikelförmigen Baumaterials in Kontakt steht, in einem Bereich zwischen 0,1-mal bis 3-mal dem Durchmesser eines Partikels des partikelförmigen Baumaterials liegt, erfolgt, wobei das Verdichterelement (2) mittels eines Antriebselements (3) in einer linearen Bewegungsrichtung (12) bewegt wird.

9. Verfahren nach Anspruch 8, **dadurch gekennzeichnet, dass** die Bewegung eines Verdichterelements (2) in der linearen Bewegungsrichtung (12) mit einer einstellbaren Frequenz und/oder einer einstellbaren Frequenzform erfolgt.

10. Verfahren nach Anspruch 9, **dadurch gekennzeichnet, dass** in der Verdichteranordnung (1) mehrere Verdichterelemente (2) bereitgestellt werden.

11. Verfahren nach Anspruch 10, **dadurch gekennzeichnet, dass** die Verdichterelemente (2) parallel zueinander oder in einem Winkel zueinander ausgerichtet bewegt werden.

12. Verfahren nach einem der Ansprüche 10 oder 11, **dadurch gekennzeichnet, dass** die Verdichterelemente (2) parallel zueinander und senkrecht oder abweichend von einer Lotsenkrechten zum Baufeld (6) angeordnet bewegt werden.

13. Verfahren nach einem der Ansprüche 10 bis 12, **dadurch gekennzeichnet, dass** die Verdichterelemente (2) zu einem Zeitpunkt in unterschiedliche Bewegungsrichtungen (12) bewegt werden.

## Claims

1. System for generating a 3D structure, comprising a particulate construction material composed of particles with a diameter, a compressor arrangement (1) with a means for compressing the particulate construction material to be applied in layers, and a drive means (3) which is connected to the compression means and which sets the compression means into linear motion, wherein a compressor element (2) having a blade with at least one cutting edge is arranged in the compressor arrangement (1) for compressing the particulate construction material to be applied in layers, and wherein the width of a cutting edge, at an end of the cutting edge that is in contact with particles (11) of a particulate construction material during a compression operation, is between 0.1 times and 3 times the diameter of a particle of the particulate construction material.

2. System according to Claim 1, **characterized in that** the width of a cutting edge is preferably between 0.3 times and 2 times, particularly preferably between 0.5 times and 1 times, the diameter of the particle of the particulate construction material.

3. System according to Claim 1 or 2, **characterized in that** the drive means (3) is an electrically or electromagnetically or piezoelectrically or electrohydraulically or pneumatically driven drive means (3).

4. System according to one of Claims 1 to 3, **characterized in that** the compressor arrangement (1) along with its compressor element (2) is arranged so as to be movable in relation to a construction field (6), on which the 3D structure (1) to be generated is built up in layers, over the surface thereof.

5. System according to one of Claims 1 to 4, **characterized in that** a plurality of compressor elements (2) which each have at least one cutting edge are arranged in the compressor arrangement (1) .

6. System according to Claim 5, **characterized in that** the compressor elements (2) are arranged parallel to one another at the same angle or at respectively different angles in relation to the construction field (6).

7. System according to one of Claims 1 to 6, **characterized in that** at least one structure (4, 5) is arranged at the ends (7) of the compressor elements (2).

8. Method for generating a 3D structure, in which a layer of a particulate construction material to be applied is provided over a construction field (6), wherein the particulate construction material is at least partially compressed and a partial physical or chemical curing process or a melting process in a build-up of layers produces the 3D structure, wherein the particulate construction material is compressed by means of a compressor element (2) which is arranged in a compressor arrangement (1) and which has a blade with at least one cutting edge, the width of a cutting edge of said compressor element, at an end of the cutting edge that is in contact with particles (11) of a particulate construction material during a compression operation, being between 0.1 times and 3 times the diameter of a particle of the particulate construction material, wherein the compressor element (2) is moved in a linear movement direction (12) by way of a drive means (3) .

9. Method according to Claim 8, **characterized in that** the movement of a compressor element (2) in the linear movement direction (12) is effected at an adjustable frequency and/or an adjustable frequency shape.

10. Method according to Claim 9, **characterized in that** a plurality of compressor elements (2) are provided in the compressor arrangement (1).

11. Method according to Claim 10, **characterized in that** the compressor elements (2) are moved oriented parallel to one another or at an angle relative to one another.

12. Method according to either of Claims 10 and 11, **characterized in that** the compressor elements (2) are moved arranged parallel to one another and perpendicularly or so as to deviate from a perpendicular with respect to the construction field (6).

13. Method according to one of Claims 10 to 12, **characterized in that** the compressor elements (2) are simultaneously moved in different movement directions (12).

## Revendications

1. Système de génération d'une structure 3D, comprenant un matériau de construction particulaire formé de particules présentant un diamètre, un ensemble compresseur (1) comprenant un moyen de compression du matériau de construction particulaire à appliquer en couches et un moyen d'entraînement (3) relié au moyen de compression et déplaçant le moyen de compression suivant un mouvement linéaire, un élément compresseur (2) qui comporte une lame pourvue d'au moins un tranchant étant disposé dans l'ensemble compresseur (1) pour compresser le matériau de construction particulaire à appliquer en couches, et la largeur d'un tranchant à une extrémité du tranchant qui est en contact avec des particules (11) d'un matériau de construction particulaire pendant un processus de compression étant comprise entre 0,1 fois et 3 fois le diamètre d'une particule du matériau de construction particulaire.

2. Système selon la revendication 1, **caractérisé en ce que** la largeur d'un tranchant est de préférence dans une gamme comprise entre 0,3 fois et 2 fois, de manière particulièrement préférée dans une gamme comprise entre 0,5 fois et 1 fois, le diamètre de la particule du matériau de construction particulaire.

3. Système selon la revendication 1 ou 2, **caractérisé en ce que** le moyen d'entraînement (3) est un moyen d'entraînement (3) entraîné électriquement ou électromagnétiquement ou piézoélectriquement ou électrohydrauliquement ou pneumatiquement.

4. Système selon l'une des revendications 1 à 3, **caractérisé en ce que** l'ensemble compresseur (1) pourvu de son élément compresseur (2) est disposé par rapport à une zone de construction (6), sur laquelle la construction en couches de la structure 3D (1) à générer est réalisée, de manière mobile au-dessus de la surface de celle-ci.

5. Système selon l'une des revendications 1 à 4, **caractérisé en ce que** plusieurs éléments compresseurs (2) comportant chacun au moins un tranchant sont disposés dans l'ensemble compresseur (1) .

6. Système selon la revendication 5, **caractérisé en ce que** les éléments compresseurs (2) sont disposés parallèlement les uns aux autres en formant le même angle ou des angles différents par rapport à la zone de construction (6).

7. Système selon l'une des revendications 1 à 6, **caractérisé en ce qu'**au moins une structure (4, 5) est disposée aux extrémités (7) des éléments compresseurs (2).

8. Procédé de génération d'une structure 3D, dans lequel une couche d'un matériau de construction particulaire à appliquer est disposée sur une zone de construction (6), le matériau de construction particulaire étant au moins partiellement compressé et la structure 3D étant réalisée dans une construction en couches par un processus de durcissement physique ou chimique partiel ou un processus de fusion, la compression du matériau de construction particulaire étant effectuée au moyen d'un élément compresseur (2) qui est disposé dans un ensemble compresseur (1) et qui comporte une lame pourvue d'au moins un tranchant et dont la largeur d'un tranchant à une extrémité du tranchant, qui est en contact avec des particules (11) d'un matériau de construction particulaire pendant un processus de compression, est dans une gamme comprise entre 0,1 fois et 3 fois le diamètre d'une particule du matériau de construction particulaire, l'élément compresseur (2) étant déplacé dans une direction de mouvement linéaire (12) au moyen d'un élément d'entraînement (3).

9. Procédé selon la revendication 8, **caractérisé en ce que** le déplacement d'un élément compresseur (2) dans le sens de déplacement linéaire (12) est effectue à une fréquence réglable et/ou avec une forme de fréquence réglable.

10. Procédé selon la revendication 9, **caractérisé en ce qu'une** pluralité d'éléments compresseurs (2) sont prévus dans l'ensemble compresseur (1).

11. Procédé selon la revendication 10, **caractérisé en ce que** les éléments compresseurs (2) sont déplacés parallèlement les uns aux autres ou orientés en formant un angle les uns par rapport aux autres.

12. Procédé selon l'une des revendications 10 et 11, **caractérisé en ce que** les éléments compresseurs (2) sont déplacés en étant disposés parallèlement les uns aux autres et perpendiculairement à une verticale à la zone de construction (6) ou en s'écartant de ladite verticale.

13. Procédé selon l'une des revendications 10 à 12, **caractérisé en ce que** les éléments compresseurs (2) sont déplacés dans différentes direction de déplacement (12) à un instant donné.
